# EUROPEAN PATENT SPECIFICATION

(11) **EP 1 363 507 B1**
(45) Date of publication and mention of the grant of the patent: **31.08.2005**
(21) Application number: 02701314.3
(22) Date of filing: 25.02.2002
(51) Int. Cl.: A23L 1/29

(54) **FUNCTIONAL FOOD AND A METHOD FOR THE PREPARATION OF SAME.**
FUNKTIONALE LEBENSMITTEL UND VERFAHREN ZUR HERSTELLUNG DERSELBEN
ALIMENT FONCTIONNEL ET SON PROCEDE DE PREPARATION

(30) Priority: 26.02.2001 FI 20010376
(43) Date of publication of application: 26.11.2003
(73) Proprietor: Oriola, OY, 02200 Espoo (FI)
(72) Inventor: KAURALA, Marita, Cecilia, FIN-02320 Espoo (FI); RAUTIO, Pia, Leena, FIN-00320 Helsinki (FI)
(74) Representative: Saijonmaa, Olli-Pekka
(86) International application number: PCT/FI2002/000152
(87) International publication number: WO 2002/067700

(56) References cited:
- WO-A1-00/30665
- WO-A2-97/32593
- DATABASE WPI Week 198550, Derwent Publications Ltd., London, GB; AN 1985-314903, XP002970603 & JP 60 221 067 A (TAKEDA CHEMICAL INDUSTRIES LTD) 05 November 1985
- DATABASE WPI Week 199833, Derwent Publications Ltd., London, GB; AN 1998-379919, XP002970604 & JP 10 150 909 A (MATSUI AKIHIRO) 09 June 1998

## Description

The present invention relates to functional food to be eaten without heating, which is a powdery mixture containing substances of plant origin, with components containing different phytoestrogens. Further, the invention relates to the method for the preparation of such food.

Phytoestrogens are hormone-like compounds naturally present in certain plants and resembling estrogens produced in a woman's system. Eaten, the phytoestrogens of plant origin are, through fermentation maintained by the intestinal flora in the gut, converted into compounds, which affect the same way as estrogens produced by the system. Thus, it has been tried to prevent women's menopausal problems, such as drying of mucous membranes and so-called hot flashes, by adding phytoestrogens to food, replacing the use of synthetic estrogen medicaments. Further, it has been noted that phytoestrogens prevent the bones from becoming brittle and prevent depression.

The main types of phytoestrogens are isoflavones, the most important source of which in food are soybeans, and lignans, which are present in very high concentrations in linseeds. The positive influence of soybeans, containing daidzen and genistein, which are part of isoflavones, have been experienced in countries, in which the diet has traditionally included a lot of soybean products. As isoflavones, also lignans, such as secoisolariciresinol and matairesinol, have been proven to metabulate in the gut into hormone-like compounds, so that their health-benefiting effects can be assumed to be similar. On the basis of this, several different health food preparations have been brought into the market, in which especially soybeans, but also linseeds are a central substance. Because isoflavones and lignans have a clearly different chemical structure, despite their common features, soybean and linseeds may have been combined in the same products in order to achieve as extensively acting product as possible. An example of such products is the health food preparation i.e. functional food disclosed in the patent application FI 973108, which, besides soybean powder and linseed, also contains fructo-oligosaccharide, which has a prebiotic influence, i.e. it stimulates the growth of gut bacteria. Furthermore, WO 00 30 665, WO 97 32 593 and JP 60 221 067 describe nutritional compositions comprising lignanes and flavones.

The properties of linseeds include high natural fat content, due to which the biggest part of fat of the seeds to be included in health products marketed as powders has to be removed for ensuring the preservability of the product. The removal of fat can be avoided, if cereal grains with a lower fat content are used as the lignan source in the product instead of linseeds.

In the powdery functional food of the invention, which is based on combining the isoflavone-containing soybean flour with a material of plant origin, acting as the lignan source, the linseed in similar known products has been replaced by rye. Secoisolariciresinol and matairesinol are found in rye grains, i.e. the same lignans as in linseeds, and in the grain, these are concentrated in its husk and parts near the husk. A further advantage of rye is that it has many known advantageous health effects, such as the cancer-preventing influence of its insoluble fibres. The availability of the extensively grown rye is good, and according to the present nutritional recommendations, its share in food should be considerably increased.

Research data on the lignans in rye and on their behaviour in the human metabolism are disclosed in the publication Adlercreutz, H., Mazur, W, The Finnish Medical Society DUODECIM, AnnMed 29, 1997, pp 95-120. According to this, the lignans in rye, secoisolariciresinol and matairesinol, are precursors in form of glycosides, which, by the action of gut bacteria, are hydrolysed into mammalian lignans enterolactone and enterodiole, which can be shown from urine. However, it was found out that with patients who had eaten rye bran, the concentrations of enterolactone and enterodiole secreted to urine did not increase. Instead, with female test persons, who had eaten rye bread, the concentrations of enterolactone and enterodiole in urine increased manifold, even compared to what could have been expected on the basis of the lignan concentrations measured from grains of rye. On the basis of this, the researches assume that rye contains also other precursors besides secoisolariciresinol and matairesinol, which are converted into mammalian lignans in the gut. In any case, the result is a proof of rye being a significant source of lignans of plant origin or lignan precursors.

On the other hand, the above mentioned research result proves that the lignans or their precursors have been converted into a form in which they provide the system with enterolactone and enterodiole only in rye baked as bread. Taking unprocessed rye would not be of consequential use for a person from the point of the supply of phytoestrogens. In other words, rye to be included in a powdery product of the invention requires a process activating lignans and/or their precursors, and in the invention, the process in question is the germination of rye grains. Because of the germination, the product can be taken without it being necessary to heat it.

Thus, it is characteristic of the functional food of the invention that, besides isoflavone-containing precooked soybean flour, it also includes lignan-containing germinated rye.

The germination of rye grains is a process, in which the grain material experiences changes similar to those taking place in digestion. In germination, especially the incipient decomposition of the husk parts of rye frees the lignans or their precursors into a form that can be utilised by the gut. Other advantageous effects of the germination are the hydrolysation of proteins, the generation of enzymes, and the increase in the number of soluble proteins. Enzymes further decompose starch into sugar, and also the fat in the seeds is decomposed into a form that can be more easily exploited.

Measurements have proved that the germination of rye grains lowers their phytine acid concentration. The reduction in phytine acid binding cationes is an advantage, because phytine acid binds minerals into a form insoluble in water, so that they cannot be exploited by the system.

The germination of rye grains is carried out by cleaning, soaking, germinating and drying by blowing warm air. The germinated and dried grains are milled, in which form they are suitable for components of a dry, powdery product. Such a powdery product is usable without cooking, for example, as a drink mixed with water, a milk product or juice, or as an additive to be mixed with other foodstuffs, such as soup, yoghurt, cereal, flakes, berries or fruit. In addition to phytoestrogens, its advantageousness as food is based on its high fibre content and minerals and vitamins.

Unlike rye grains, the soybeans to be used in the product of the invention are not germinated, but soybeans are only precooked, for example, by heating. Avoiding germination is due to that, according to researches, the germination considerably reduces the content of isoflavoneglycosides in the soybean, i.e. it would act against the goals of the invention, cf. Price, K.R., Fenwick, G.R., Food Additives and Contaminants, vol. 2, 1985, No. 2, pp 73 - 106, and Murphy, P.A., Food Technology (Champaign), 1982, pp 62 - 64. The precooking is again necessary for bringing the soybean into a form advantageous for digestion. Heating denatures the lectines in the raw soybeans, which would otherwise inhibit the absorption of nutrients, and trypsine inhibitors, which would have a weakening effect on the digestion of proteins.

In addition to soybean and rye, dried lingonberry may be included in the product of the invention as spice. Lingonberry contains flavonoids, and also vitamins and minerals. Another provider of flavour, which has corresponding properties and which can be used in addition to or instead of lingonberry, is dried rose hip. The latter is rich in vitamin C, and when mixed with water, it has a strongly distending effect on the product.

For flavouring the product, sugar or some other sweetener may further be added to it. Especially suitable sweetener is raw cane sugar, which, deviating from white sugar, contains also minerals, such as iron and calcium.

Of the main components in the product, the share of soybean flour may be 30 - 70%, preferably 40 - 60%, and the share of germinated and milled rye may be 20 - 60%, preferably 25 - 40%. Preferable product compositions with good flavour are acquired by mixing 40 - 60% of soybean flour, 25 - 40% of germinated milled rye, 3 - 15% of dried lingonberry, 0 - 15% of dried rose hip, and 0 - 15% of raw cane sugar.

The method of the invention for preparing the above described functional food is characterised in that the rye grains are germinated, that the germinated grains are dried and milled, and that the resulting powder is combined with precooked soybean flour and other possible components of the product by mechanical mixing. The germination may be carried out by first soaking rye grains in water for 12 - 36 hours, suitably for about 24 hours; then, water is removed, and the grains are allowed to germinate in room temperature for 24 - 60 hours, suitably for 36 - 48 hours, during which time the germs have time to grow a few millimetres long. The germination is followed by drying by blowing air of 60 - 78°C to them, and the milling of germinated seeds is carried out after the drying.

The invention is next illustrated in more detail with the help of exemplary compositions of some functional foods of the invention.

### Example 1

| | |
|---|---|
| Soybean flour | 50% |
| Germinated rye | 35% |
| Dried lingonberry | 5% |
| Raw cane sugar | 10% |

### Example 2

| | |
|---|---|
| Soybean flour | 45% |
| Germinated rye | 35% |
| Dried rose hip | 10% |
| Dried lingonberry powder | 5% |
| Canderel sweetener | 5% |

### Example 3

| | |
|---|---|
| Soybean flour | 50% |
| Germinated rye | 30% |
| Dried lingonberry | 10% |
| Fibrex sugarbeet flakes | 5% |
| Raw cane sugar | 5% |

### Example 4

| | |
|---|---|
| Soybean flour | 46% |
| Germinated rye | 35% |
| Raw cane sugar | 10% |
| Dried lingonberry powder | 5% |
| Rose hip powder | 4.5% |
| Acerola cherry powder | 0.5% |

### Example 5

| | |
|---|---|
| Soybean flour | 43% |
| Germinated rye | 35% |
| Raw cane sugar | 10% |
| Dried lingonberry | 7% |
| Rose hip powder | 5% |

### Example 6

| | |
|---|---|
| Soybean flour | 46% |
| Germinated rye | 35% |
| Raw cane sugar | 10% |
| Lingonberry powder | 5% |
| Rose hip powder | 4% |

### Example 7

| | |
|---|---|
| Lecithinised soybean flour | 60% |
| Germinated rye | 35% |
| Dried lingonberry | 5% |

### Example 8

| | |
|---|---|
| Soybean flour | 50% |
| Germinated rye | 35% |
| Rose hip powder | 10% |
| Dried lingonberry | 5% |

### Information about the raw materials of the exemplary compositions

### Germinated rye

Manufacturing process:
- rye grains are washed and soaked for 24 hours
- possible rubbish risen onto the surface in soaking are removed
- germination for 36 - 48 hours
- air drying in 60 - 78°C (by airing)
- cooling
- milling
- phytine acid content 6.43 mg/g ka

### Lecithinised soybean flour

- precooked
- colour: from yellowish to light brown
- granulation: min 95% through #325 mesh US St. Sieve (0.045)
- fat content 8% (lecithin)
- protein content: 49% of dry substance
- energy content: 1600 kJ/100 g
- PER (Protein Efficiency Ratio) 2.0
- preservability time: 24 months from the manufacture
- special property: mixes excellently with water

### Soybean flour

- precooked by toasting
- no enzyme activity left
- contains naturally lecithin (acts as natural emulsifying agent in the finished product)
- energy content 1743 kJ / 416g
- protein content 37%
- fat content 23%
   - saturated fatty acids 18.2%
   - monounsaturated fatty acids 18.2%
   - polyunsaturated fatty acids 63.6%
- carbohydrate content 27%
- ash 5 %
- colour: light yellow

### Lingonberry powder

- prepared of lingonberries dried whole
- cleaning: rubbish and small, discoloured and bad berries are electronically removed from the raw material
- drying process: 100g of dried lingonberry is acquired from 1kg of lingonberry
- taste: strong lingonberry flavour
- colour: dark red

### Acerola cherry powder

Trade name: Acerola ext 25% VIT C

### Description of the product:

- species: Malpighia glabra L.
- plant part: berries
- active substance: vitamin C
- appearance: powder
- colour: tan/beige
- taste: characteristic
- storing: in a dry and cool place
- preservability: normally 1 year
- activity: NLT 25% vitamin C

### Canderel sweetener

- aspartame-based sweetener
- aspartame content 3%
- light powder
- colour: white
- sweetness value: 1dl corresponds to 1dl of ordinary sugar in sweetness
- energy content 410 kcal / 100g

### Dried rose hip

- powder
- prepared from ripe rose hips, from which the seeds of the interior have been removed
- the berries have been dried fast by using warm air drying
- high vitamin C content, which is well preserved when stored in dry and dark
- nutritional value / 100g:
   - energy 1559 kJ / 372 kcal
   - protein 5.0g
   - carbohydrates 69.0g
   - fat 2.0g
   - fibre 14.0g
   - calcium 320mg
   - iron 5.0mg
   - vitamin C 290mg
- colour: reddish brown

### Fibrex sugarbeet flakes

- condition: flake structure resembling rye flakes
- prepared from sugarbeet by physical methods
- high fibre content: 73%
- fibre: 1/3 soluble in water, gelating
- energy content: 225 kJ / 100g
- protein content: 10%
- pH 4.5 ± 0.5
- particle size: 0.5 - 2.0mm

### Raw cane sugar

- prepared from sugarcane by pressing the juice with the help of rotating rollers. Filtered, boiled and crystallised, after which the crystals are separated and dried
- deviating from ordinary white sugar, this also contains minerals, such as iron and calcium
- colour: brown
- crystal: coarser than, for example, in brown sugar
- nutritional value / 100g:
   - energy 1554 kJ / 374 kcal
   - protein 0g
   - carbohydrates 97g
   - of which saccharose 95g
   - fat 0g
   - iron 4mg

It is obvious for one skilled in the art that the embodiments of the invention are not limited to those presented as examples above, but they can vary within the scope of the following claims.

## Claims

1. Functional food to be eaten without heating, which is a powdery mixture containing substances of plant origin, and which has components containing different phytoestrogens, **characterised in that** the mixture contains isoflavone-containing precooked soybean flour and lignane-containing germinated rye.

2. Food according to claim 1, **characterised in that** it also contains dried lingonberry.

3. Food according to claim 1 or 2, **characterised in that** it also contains dried rose hip.

4. Food according to one of the preceding claims, **characterised in that** it contains 30 - 70%, preferably 40 - 60% of soybean flour.

5. Food according to one of the preceding claims, **characterised in that** it contains 20 - 60%, preferably 25 - 40% of germinated rye.

6. Food according to claims 4 and 5, **characterised in that** it contains:
- 40 - 60% of soybean flour,
- 25 - 40% of germinated rye,
- 3 - 15% of dried lingonberry,
- 0 -15% of dried rose hip,
- 0 - 15% of raw cane sugar.

7. Method for preparing functional food according to one of the preceding claims, **characterised in that** rye grains are germinated, that the germinated grains are dried and milled, and that the resulting powder is combined with precooked soybean flour and other possible components of the product by mechanical mixing.

8. Method according to claim 7, **characterised in that** rye grains are soaked in water for 12 - 36 hours, germinated for 24 - 60 hours in room temperature, and dried by air blowing, after which the grains are milled and mixed with the other components of the product.

## Patentansprüche

1. Funktionelles Lebensmittel zum Verzehr ohne Erhitzen, welches eine pulverförmige Mischung ist, die Substanzen pflanzlichen Ursprungs enthält, und welches Bestandteile hat, die verschiedene Phytoöstrogene enthalten, **dadurch gekennzeichnet, dass** die Mischung isoflavonhaltiges, vorgekochtes Sojamehl und lignanhaltigen, gekeimten Roggen enthält.

2. Lebensmittel gemäß Anspruch 1, **dadurch gekennzeichnet, dass** es auch getrocknete Preiselbeere enthält.

3. Lebensmittel gemäß einem der Ansprüche 1 oder 2, **dadurch gekennzeichnet, dass** es auch getrocknete Hagebutte enthält.

4. Lebensmittel gemäß einem der vorherigen Ansprüche, **dadurch gekennzeichnet, dass** es 30 bis 70 %, vorzugsweise 40 bis 60 % Sojamehl enthält.

5. Lebensmittel gemäß einem der vorherigen Ansprüche, **dadurch gekennzeichnet, dass** es 20 bis 60 %, vorzugsweise 25 bis 40 % gekeimten Roggen enthält.

6. Lebensmittel gemäß einem der Ansprüche 4 und 5, **dadurch gekennzeichnet, dass** es enthält:
- 40 bis 60 % Sojamehl,
- 25 bis 40 % gekeimten Roggen,
- 3 bis 15 % getrocknete Preiselbeere,
- 0 bis 15 % getrocknete Hagebutte,
- 0 bis 15 % Rohrrohzucker.

7. Verfahren zur Herstellung eines funktionellen Lebensmittels gemäß einem der vorherigen Ansprüche, **dadurch gekennzeichnet, dass** Roggenkömer gekeimt werden, dass die gekeimten Kömer getrocknet und gemahlen werden, und dass das entstehende Pulver mit vorgekochtem Sojamehl und anderen möglichen Bestandteilen des Produktes durch mechanisches Mischen kombiniert wird.

8. Verfahren gemäß Anspruch 7, **dadurch gekennzeichnet, dass** Roggenkörner in Wasser für 12 bis 36 Stunden eingeweicht, für 24 bis 60 Stunden bei Raumtemperatur gekeimt und durch Abblasen getrocknet werden, wonach anschließend die Körner gemahlen und mit den anderen Bestandteilen des Produktes gemischt werden.

## Revendications

1. Aliment fonctionnel à manger sans chauffage, qui est un mélange en poudre contenant des substances d'origine végétale, et qui comporte des composants contenant différents phytoestrogènes, **caractérisé en ce que** le mélange contient de la farine de soja précuite contenant de l'isoflavone et du seigle germé contenant de la lignane.

2. Aliment selon la revendication 1, **caractérisé en ce qu'**il contient également de l'airelle séchée.

3. Aliment selon la revendication 1 ou 2, **caractérisé en ce qu'**il contient également du cynorrhodon séché.

4. Aliment selon l'une des revendications précédentes, **caractérisé en ce qu'**il contient 30 à 70 %, de préférence 40 à 60 % de farine de soja.

5. Aliment selon l'une des revendications précédentes, **caractérisé en ce qu'**il contient 20 à 60 %, de préférence 25 à 40 % de seigle germé.

6. Aliment selon les revendications 4 et 5, **caractérisé en ce qu'**il contient :
- 40 à 60 % de farine de soja,
- 25 à 40 % de seigle germé,
- 3 à 15 % d'airelle séchée,
- 0 à 15 % de cynorrhodon séché,
- 0 à 15 % de sucre de canne brut.

7. Procédé pour préparer un aliment fonctionnel selon l'une des revendications précédentes, **caractérisé en ce que** les grains de seigle sont germés, **en ce que** les grains germés sont séchés et broyés, et **en ce que** la poudre résultante est combinée à de la farine de soja précuite et d'autres composants possibles du produit par mélange mécanique.

8. Procédé selon la revendication 7, **caractérisé en ce que** les grains de seigle sont trempés dans l'eau pendant 12 à 36 heures, mis à germer pendant 24 à 60 heures à température ambiante, et séchés par soufflage d'air, après lequel les grains sont broyés et mélangés avec les autres composants du produit.
